# NEUE EUROPÄISCHE PATENTSCHRIFT

(11) **EP 1 541 336 B2**
(45) Veröffentlichungstag und Bekanntmachung des Hinweises auf die Entscheidung über den Einspruch: **05.10.2016**
(45) Hinweis auf die Patenterteilung: 14.01.2009
(21) Anmeldenummer: 04405764.4
(22) Anmeldetag: 09.12.2004
(51) Int. Cl.: B32B 27/08, B32B 27/34, C08L 77/00, F16L 11/04

(54) **Thermoplastischer Mehrschichtverbund**
Thermoplastic multilayer
Multi-couche thermoplastique

(30) Priorität: 12.12.2003 CH 212503
(43) Veröffentlichungstag der Anmeldung: 15.06.2005
(73) Patentinhaber: EMS-CHEMIE AG, 7013 Domat-Ems (CH)
(72) Erfinder: Stöppelmann, Georg, 7402 Bonaduz (CH); Schwitter, Paul, 8718 Schänis (CH); Sturzel, André, 7206 Igis (CH)
(74) Vertreter: Bremi, Tobias Hans

(56) Entgegenhaltungen:
- EP-A- 0 767 190
- EP-A- 1 216 823
- US-A- 5 658 670
- US-B1- 6 361 641

## Beschreibung

### TECHNISCHES GEBIET

Die vorliegende Erfindung betrifft einen thermoplastischen Mehrschichtverbund aufgebaut aus wenigstens einer ersten Schicht auf Basis von Fluorpolymeren, sowie wenigstens einer weiteren, wenigstens bereichsweise unmittelbar an die erste Schicht grenzenden zweiten Schicht.

### STAND DER TECHNIK

Polyamide bzw. Fluorpolymere sind für sich allein genommen für jeweils viele Anwendungen ungeeignet. Polyamide sind z.B. nicht witterungsbeständig, da sie unter Belichtung altern sowie Luftfeuchtigkeit aufnehmen. Dies kann zu Verfärbungen und zur Verschlechterung der mechanischen Eigenschaften führen. Obwohl Polyamide sehr gute mechanische Eigenschaften wie gute Zähigkeit usw. aufweisen, besitzen sie jedoch eine schlechte Barrierewirkung gegenüber polaren Substanzen, die entsprechend leicht durch Polyamide migrieren können. Dies ist beispielsweise bei Kraftstoffleitungen für alkoholhaltige Kraftstoffe im Hinblick auf die immer strenger werdenden Umweltschutzund Sicherheitsvorschriften unerwünscht.

Ein weiterer Nachteil von insbesondere einschichtigen Kraftstoffleitungen aus Polyamid, speziell aus Polyamid 11 oder 12 besteht in einem beträchtlichen Aufnahmevermögen der Polymere für spezielle Bestandteile der Kraftstoffe, was zu Quellvorgängen und somit zu Längenänderungen sowie Dickenänderungen der Rohrleitungen führt.

Aus den USA sind Entwicklungen bekannt, bei welchen in einer derartigen Situation Fluorpolymere als Barriereschichten zum Einsatz kommen sollen. Diese Polymere sind nicht nur sehr teuer, sondern auch schwer zu verarbeiten, schwer zu entsorgen und zeigen in der Koextrusionsverarbeitung nur geringe Verbundhaftung bzw. sie sind sogar mit Polyamiden weitgehend unverträglich, was bei der Herstellung von Mehrschichtverbunden keine ausreichende Haftung zwischen den Laminatschichten ergibt. Ein kraftschlüssiger thermoplastischer Mehrschichtverbund ist aber bei technischen Anwendungen unbedingt erforderlich.

Es wurden deshalb Entwicklungen durchgerührt, um derartige Systeme zu verbessern.

Die DE-A-4326130 beschreibt beispielsweise Mehrschichtverbunde, insbesondere Zweischichtverbunde aus einer Schicht auf Basis von Polyamid und einer weiteren Schicht auf Basis von Polyvinylidenfluorid (PVDF). Das Problem der kraftschlüssigen Verbindung wird durch Zugabe von Polymethacrylimid zu PVDF gelöst. Mit anderen Worten wird hier auf eine Haftvermittlerschicht verzichtet, und dafür an Stelle die Schicht aus Fluorpolymer derart modifiziert, dass eine Haftung zur Schicht auf Basis von Polyamid möglich ist. Nachteilig ist jedoch bei solchen Rohren, in denen PVDF als Barriereschicht verwendet wird, deren geringe Flexibilität, was bei engen Biegeradien zum Knicken des Rohres führen kann.

Ein anderer Ansatz wird in der EP-A-0511094 beschritten, wo ebenfalls ein Zweischichtverbund mit einer ersten Schicht auf Basis eines Fluorpolymers und einer zweiten Schicht auf Basis von Polyamiden beschrieben wird, wobei die gute Haftung zwischen diesen beiden chemisch sehr unterschiedlichen Schichten durch eine Coronaaktivierung der Schicht aus Fluorpolymer gewährleistet wird. Auch hier wird also auf eine Haftvermittlerschicht verzichtet.

Ebenfalls ein Zweischichtaufbau mit einer ersten Schicht auf Basis eines Fluorpolymeren (konkret Copolymer mit TFE) und einer zweiten Schicht aus einem Polyamid beschreibt die US 6,524,671. Zur Gewährleistung einer zufriedenstellenden Haftung zwischen diesen beiden Schichten wird in diesem Dokument eine chemische Modifikation der Polyamid-Schicht vorgeschlagen. Diese Polyamid-Schicht wird mit polaren Gruppen modifiziert, so z. B. unter Bildung eines Propfcopolymeren auf Basis von Maleinsäureanhydriden und ungesättigten Kohlenwasserstoffen.

Andere Dokumente beschreiben spezifische Haftvermittlerschichten, welche in der Lage sind, eine genügende Haftung zwischen einer ersten Schicht auf Basis eines Fluorpolymeren und einer zweiten Schicht auf Basis von Polyamid zu vermitteln.

So beispielsweise die US 5,576,106, in welcher als Haftvermittlerschicht ein Fluorpolymer vorgeschlagen wird, welches an der Oberfläche der Partikel unter Einwirkung ionisierender Strahlung gepfropft ist. Als Fluorpolymer wird dabei ETFE oder PVDF verwendet, wobei als Pfropf-Reagens unter anderem Maleinsäureanhydrid vorgeschlagen wird.

Auch die EP-A-0767190 beschreibt einen Mehrschichtverbund mit einer inneren Schicht aus Fluorpolymer und einer äusseren Schicht aus Polyamid, wobei dazwischen eine Haftvermittlerschicht vorgesehen wird, welche aus einem auspolymerisierten Polyamid und einem nachträglich zugemischten Diamin, beispielsweise Decandiamin, besteht. Dabei wird angeführt, dass durch die Anwesenheit von zusätzlichem, freiem Diamin das Verhältnis der Amino- zu Carboxylgruppen erhöht wird, und dass dadurch eine verbesserte Haftung erreicht werden kann.

Die US 5,284,184 beschreibt ebenfalls eine Kraftstoffleitung, welche als innere Schicht eine Schicht auf Basis von Fluorpolymer aufweist, und als äussere Schicht eine Schicht aus Polyamid. Dazwischen ist eine thermoplastische Haftvermittlerschicht vorgesehen, wobei dafür als Beispiele Polyvinylidenfluoride, Polyvinylfluoride, Polyvinyl-Acetat-Urethan-Blends und Mischungen davon konkret vorgeschlagen werden.

Die US 5,891,538 beschreibt einen Mehrschichtaufbau, bei welchem als Haftvermittler zwischen dem Fluorpolymer und dem Polyamid ein Blend aus diesen beiden Systemen vorgeschlagen wird, konkret eine Mischung aus Polyamid und Fluorharzen und Fluorkautschuk.

US-5,383,087 beschreibt Mehrschichtrohre mit Fluörpolymer-Inhenschicht und einer Aussenschicht aus Polyamid 6, Polyamid 12 oder Polypropylen. Als Haftvermittler zwischen diesen beiden Schichten werden Fluorpolymer-Polyamidblends eingesetzt.

Haftvermittler auf Basis von Blends aus Fluorpolymer und Polyamid nutzen jedoch nur physikalische Wechselwirkungen aus und besitzen daher relativ niedrige Haftwerte. Weiterhin ist die Verwendung eines Fluorpolymer-Polyamidblends problematisch, da langfristig eine Dehydrofluorierung der Fluorpolymeren verursacht wird und ein Abbau der Fluorpolymere stattfindet. Der dabei entstehende Fluorwasserstoff ist ein stark korrosives, die Atemwege reizendes Gas, was aus Umweltschutz- und Sicherheitsüberlegungen meist nicht vertretbar ist.

Auch die EP-A-0670774 beschreibt einen für derartige Anwendungen möglichen Haftvermittler, wobei die Haftvermittlerschicht hier aus einem Blend aus Polyamid und Polyvinylidenfluorid gestellt wird.

EP-A-0637509 beschreibt Fünfschichtrohre aus Fluor-Polymeren, Polyestern und Polyamiden. Die zwei Haftvermittlerschichten sind aus thermoplastischem Polyurethan, Polyetherblockamiden, Polyesterblockamiden, Polyolefinen, Polyestercopolymeren ausgebildet.

Aus der US 6,361,641 ist des Weiteren ein System für Leitungsanwendungen im Automobilbereich bekannt, bei welchem eine Schicht aus Fluorpolymer mit einer Schicht aus einem Polymer ohne Fluorierung verbunden wird, dies unter, Zuhilfenahme einer Mischung (Blend) aus einem Wasserstoff-enthaltenden Fluorpolymer und einem Polyamid mit angehängten Aminogruppen (polyamide with pendant amine groups).

Die EP-A-1 065 048 beschreibt einen thermoplastischen Mehrschichtverbund, bei dem eine erste thermoplastische Schicht (Schicht I) mittels einer Haftvermittler-Schicht auf Basis eines Polyamid/Polyamin-Propfcopolymeren mit einer zweiten thermoplastischen Schicht (Schicht II) verbunden ist. Es soll ein Mehrschichtverbund bereitgestellt werden, bei dem auch im Kontakt mit Reagenzien wie z.B. Kraftstoff, Lösemitteln, Ölen und Fetten sowie bei höherer Temperatur die Schichthaftung über lange Zeit erhalten bleibt. Die beschriebene Sperrschicht ist eine Polyesterschicht.

### DARSTELLUNG DER ERFINDUNG

Der Erfindung liegt die Aufgabe zugrunde, eine Schicht auf Polyamidbasis bereitzustellen, welche mit thermoplastisch verarbeitbaren Fluorpolymeren, insbesondere Fluorpolymeren auf Basis von TFE, HFP und VDF unmittelbar, z.B. in einem Koextrusionsprozess kraftschlüssig verbindbar ist, und ausserdem bevorzugt als Haftvermittlerschicht mit Schichten auf Basis von Polyamiden dienen kann. Weiterhin sollen thermoplastische Mehrschichtverbunde aus diesen Fluorpolymer- und Polyamidformmassen bereitgestellt werden. Die Formmassen und die daraus hergestellten thermoplastischen Mehrschichtverbunde sollen kraftschlüssig im thermoplastischen Mehrschichtverbund aufeinander haften; sie sollen insbesondere bevorzugt gegen Kraftstoffe beständig sein und eine ausreichend geringe Permeation zeigen. Konkret geht es somit darum, einen verbesserten thermoplastischen Mehrschichtverbund vorzuschlagen, welcher aufgebaut ist aus wenigstens einer ersten Schicht auf Basis von Fluorpolymeren, sowie wenigstens einer weiteren, wenigstens bereichsweise unmittelbar an die erste Schicht grenzenden zweiten Schicht.

Die Lösung dieser Aufgabe wird durch einen thermoplastischen Mehrschichtverbundes nach Anspruch 1 gelöst, wobei u.a. die zweite Schicht auf Basis von Polyamid/Polyamin-Copolymeren aufgebaut ist.

Der Kern der Erfindung besteht somit u.a. darin, eine gute Haftung zur Schicht aus Fluorpolymer dadurch zu gewährleisten, dass ein Copolymer auf Basis von Polyamid/Polyamin als haftende Schicht vorgesehen wird. Es zeigt sich, dass erstaunlicherweise derartige Copolymere eine stark verbesserte Haftung ermöglichen.

Die Erfindung betrifft somit einen Mehrschichtverbund auf Polyamidbasis.

Es muss im Zusammenhang mit derartigen Polyamid/Polyamin-Copolymeren darauf hingewiesen werden, dass sie als Komponenten in Blends für Haftvermittlerschichten bereits im Stand der Technik Erwähnung gefunden haben. So ist beispielsweise auf die EP-A-1216825 oder die EP-A-1216826 hinzuweisen, welche grundsätzlich einen Mehrschichtverbund beschreiben, welcher eine Schicht aus einer Formmasse aus Polyamid (bevorzugt Polyamid 6, Polyamid 66 oder Polyamid 6/66 sowie Mischungen davon), optional mit einem Polyamin-Polyamid-Copolymeren versetzt, sowie mit Gewichtsteilen von anderem Polyamid (bevorzugt Polyamid 11, Polyamid 12, Polyamid 612, Polyamid 1012, Polyamid 1212 sowie Mischungen davon) sowie ggf. anschliessend daran eine Schicht aus Ethylen/Vinylalkohol-Copolymer (EP-A-1216826) enthält. Dabei wird die Schicht aus Polyamid bevorzugt bei einem Rohr aussenseitig angeordnet. Die Zielsetzung besteht dabei im wesentlichen darin, in der Formmasse aus Polyamid entweder ein Polyamin-Polyamid-Copolymeres als Verträglichkeitsvermittler vorzusehen, oder bei Abwesenheit eines derartigen Polyamin-Polyamid-Copolymeren die Kompoundiertemperatur derart hoch anzusetzen, dass dabei Umamidierungen ablaufen, welche bei der Kompoundierung zu die Funktion des Verträglichkeitsvermittlers übernehmenden Polyamid-Blockcopolymeren führen. Dieser Vorgang wird bevorzugt zusätzlich durch Zugabe von entsprechenden Katalysatoren wie beispielsweise hypophosphorige Säure, Dibutylzinnoxid, Triphenylphosphin oder Phosphorsäure unterstützt.

In diesen Dokumenten wird aber an keiner Stelle eine Bemerkung darüber verloren, dass ein Polyamid/Polyamin-Copolymer, insbesondere ein Polyamin/Polyamid-Copolymer ohne weitere Mischungsanteile von Polyamid, gegebenenfalls gute Haftungseigenschaften zu Fluorpolymer-Schichten aufweisen könnte. Diese völlig andersartige Verwendung als Haftvermittler bei Fluorpolymer-Schichten wird durch dieses Dokument auch nicht nahegelegt, da es hier immer nur um Haftvermittler zu chemisch völlig anderen Schichten wie beispielsweise Polyamiden oder Ethylen/Vinylalkohol-Copolymeren geht.

Auch weitere Dokumente, welche Polyamid/Polyamin-Copolymere beschreiben, wie beispielsweise die EP-A-1065236, die EP-A-1217041, die EP-A-1216823 sowie die US 3,442,975 sind gleich einzustufen wie die EP-A-1216825 sowie die EP-A-1216826 da auch in diesen Dokumenten kein Hinweis auf mögliche benachbarte Schichten aus Fluorpolymeren zu finden ist.

Eine erste bevorzugte Ausführungsform des Mehrschichtverbundes ist dadurch gekennzeichnet, dass das Fluorpolymere ausgewählt ist aus Fluorpolymeren auf Basis von Monomeren wie Tetrafluorethylen (TFE), Hexafluoropropylen (HFP), Vinylfluorid (VF), Perflüoromethylvinylether (PMVE) oder Vinylidenfluorid (VDF), oder aus Gemischen einer derartigen Basis, mit oder ohne Ethylen. Es sind Homo- und Copolymere möglich. Insbesondere bevorzugt handelt es sich bei der ersten Schicht um eine Schicht auf Basis von Ethylen/Tetrafluoroethylen-Copolymeren (ETFE) oder auf Basis von Polyvinylidenfluorid (PVDF). Das Fluorpolymer kann auch ein Copolymer auf Basis von PVDF sein. Eine derartige Schicht muss nicht (kann aber), damit eine gute Haftung zur zweiten Schicht gewährleistet ist, beispielsweise über eine Oberflächenbehandlung (vgl. EP-A-0551094) oder über eine chemische Modifikation des Fluorpolymers (vgl. DE-A-4326130) modifiziert werden. Mit anderen Worten handelt es sich vorzugsweise um eine bezüglich Haftung unmodifizierte Schicht auf Basis von Fluorpolymeren.

Wie bereits eingangs erwähnt, ist ein derartiger thermoplastischer Mehrschichtverbund in Form eines Hohlkörpers (darunter sollen hier und im Folgenden auch Hohlprofile verstanden werden) ausgebildet, wobei es sich bei dem als Hohlkörper ausgebildeten Mehrschichtverbund bei der ersten Schicht um eine der Innenseite des Hohlkörpers zugewandte Schicht handelt. Weiterhin wirkt die zweite Schicht als Haftvermittler zu einer dritten Schicht, d. h. die zweite Schicht grenzt wenigstens bereichsweise unmittelbar an eine dritte Schicht auf Basis von Polyamiden. Eine besonders gute Haftung wird zwischen der zweiten und der dritten Schicht erreicht, indem die Polyamid/Polyamin-Copolymere der zweiten Schicht und die Polyamide der dritten Schicht wenigstens teilweise ähnlich sind, und wenn wenigstens 95% der Monomere der zweiten Schicht und der dritten Schicht identisch sind.

Die Erfindung zeichnet sich dadurch aus, dass der Mehrschichtverbund als Hohlkörper ausgebildet ist, wobei es sich bei der ersten Schicht um eine wenigstens mittelbar der Innenseite des Hohlkörpers zugewandte Schicht handelt (es können aber noch innenseitig weitere Schichten angeordnet sein) und wobei es sich bei der dritten Schicht um eine wenigstens mittelbar der Aussenseite des Hohlkörpers zugewandte Schicht handelt, und wobei die Schichten im wesentlichen vollflächig unmittelbar aneinander grenzen.

Vorzugsweise handelt es sich bei den Polyamid/Polyamin-Copolymeren der zweiten Schicht und/oder den Polyamiden der dritten Schicht um Polymerisate oder Polykondensate basierend auf aliphatischen Lactamen oder ω- Aminocarbonsäuren mit 4 bis 44 Kohlenstoffatomen. Bevorzugt sind dabei 4 bis 18 Kohlenstoffatome, insbesondere 12 Kohlenstoffatome oder solche aus aromatischen ω-Aminocarbonsäuren mit 6 bis 20 Kohlenstoffatomen. Es kann sich alternativ oder zusätzlich bei den Polyamid/Polyamin-Copolymeren der zweiten Schicht und/oder den Polyamiden der dritten Schicht um Polykondensate basierend auf mindestens einem Diamin und mindestens einer Dicarbonsäure mit jeweils 2 bis 44 Kohlenstoff-Atomen handeln. In diesem Fall handelt es sich bei den Diaminen um wenigstens eines oder mehrere der Diamine ausgewählt aus der Gruppe: Ethyldiamin, 1,4-Diaminobutan, 1,6-Diaminohexan (= Hexamethylendiamiii), 1,10-Diaminodecan, 1,12-Diaminododecan, m- und p-Xylylendiamin, Cyclohexyldimethylenamin, Bis-(p-aminocyclohexyl)methan und deren Alkylderivate, und/oder es handelt sich bei den Dicarbonsäuren um eine oder mehrere der folgenden Dicarbonsäuren: Bernstein-, Glutar-, Adipin-, Pimelin-, Kork-, Azelain- und Sebacinsäure, Dodecandicarbonsäure, 1,6-Cyclohexandicarbonsäure, Terephthalsäure, Isophthalsäure und Naphthalindicarbonsäure. Die genannten Lactame oder ω-Aminocarbonsäuren werden aber insbesondere als Bausteine zusammen mit Polyaminen wie z.B. (verzweigten) Polyethyleniminen zur Herstellung der Polyamid/Polyamin-Copolymere bevorzugt.

Gemäss einer weiteren bevorzugten Ausführungsform der vorliegenden Erfindung handelt es sich bei der Basis für die Polyamid/Polyamin-Copolymere der zweiten Schicht und/oder den Polyamiden der dritten Schicht um Homo- und Copolyamide ausgewählt aus PA 6, PA 11, PA 46, PA 12, PA 1212, PA 1012, PA 610, PA 612, PA 69, PA 6T, PA 6I, PA 10T, PA 12T, PA 12I, deren Gemischen oder Copolymeren auf Basis dieser Polyamide, wobei PA 11, PA 12, PA 1212, PA 10T, PA 12T oder Copolymere auf Basis von den vorgenannten Polyamiden wie insbesondere PA 12T/12, PA 10T/12, PA 12T/106 und PA 10T/106 insbesondere bevorzugt sind. Es kann sich bei der Basis für die Polyamid/Polyamin-Copolymere der zweiten Schicht und/oder den Polyamiden der dritten Schicht auch um PA 6/66, PA 6/612, PA 6/66/610, PA 6/66/12, PA 6/6T und PA 6/6I handeln. Diesen Polyamiden bzw. Polyamid/Polyamin-Copolymeren können dabei andere Polymere wie insbesondere Polymere oder Copolymere auf Polyolefinbasis, die mit Acrylsäure oder Maleinsäureanhydrid gepfropft sind, und/oder Zusatzstoffe wie UV- und Hitzestabilisatoren, Kristallisationsbeschleuniger, Weichmacher, Flammschutzmittel, Schlagzähmodifikatoren und Gleitmittel zugesetzt sein.

Gemäss einer weiteren bevorzugten Ausführungsform der vorliegenden Erfindung handelt es sich bei den Polyaminen, die zur Herstellung der Polyamid/Polyamin-Copolymere für die zweite Schicht verwendet werden, um Polyvinylamine, Polyamine (z.B. hergestellt aus alternierenden Polyketonen, wie dies in der DE-A-196 54 058 beschrieben ist), Dendrimere, oder insbesondere bevorzugt um lineare oder verzweigte Polyethylenimine. Handelt es sich um lineare oder verzweigte Polyethylenimine, so verfügen diese bevorzugtermassen über ein Molgewicht im Bereich von 500 bis 25000 g/mol, insbesondere von 800 bis 5000 g/mol. Weiterhin zeichnen sie sich durch eine Viskosität im Bereich von bevorzugt ca. 1200 bis ca. 5000 mPa*s bei 20 °C aus.

Typischerweise ist die Formmasse der zweiten Schicht (d.h. das Polyamid/Polyamin-Copolymer) durch eine Amino-Endgruppenkonzentration im Bereich von 50 bis 300 µÄq/g gekennzeichnet. Weiterhin verfügt sie bevorzugtermassen über einen Volumen-Fliessindex (MVR, Melt Volume Rate) von 10 bis 50 cm³/10min für Leitungen und Behälter, beziehungsweise von 50 bis 500 cm³/10min für die Beschichtung von optischen Leitern, gemessen bei 275°C/5kg nach ISO 1133. Der Volumen-Fliessindex MVR (Melt Volume Rate; früher MVI, Melt Volume Index) ist der Volumen-Fliessindex in cm³ pro 10 Minuten, gemessen nach einer Aufschmelzzeit von 4 Minuten bei 275 °C und einer Belastung von 5 kg unter Verwendung eines genormten MVR-Gerätes.

Weiterhin bevorzugt kann die erste Schicht auf Basis von Fluorpolymer insbesondere durch Beimengung von Russ- oder Graphitpartikeln oder anderen elektrisch leitfähigen Additiven antistatisch ausgerüstet sein. Insbesondere unter diesen Bedingungen ist typischerweise die Gewährleistung einer guten Haftung zu einer weiteren Schicht auf Basis von Polyamiden äusserst schwierig, kann aber im vorliegenden Fall mit der erfindungsgemässen Formmasse für Schicht 2 erreicht werden.

Die erfindungsgemässe Formmasse für die zweite Schicht ist dadurch gekennzeichnet, dass sie Polyamin, in Form von Polyethylenimin, in einer Menge von 0.2 bis 5 Gew.-%, bevorzugt in einer Menge von 0.4 bis 1.5 Gew.-%, als Cokomponente im Polyamid/Polyamin-Copolymer enthält, wobei die restlichen Co-Anteile des Copolymers bevorzugt aus Polyamid bestehen. Weitere Zusätze wie beispielsweise Schlagzähmodifikatoren, Weichmacher etc. können aber ebenfalls in der zweiten Schicht anwesend sein.

Weitere bevorzugte Ausführungsformen des erfindungsgemässen Mehrschichtverbundes sind in den abhängigen Ansprüchen beschrieben.

Zusätzlich betrifft die vorliegende Erfindung die Verwendung eines thermoplastischen Mehrschichtverbundes, wie er oben beschrieben ist, als medienführende Leitung oder Behälter insbesondere im Kraftfahrzeugbereich. So beispielsweise als Kraftstoffleitung für z. B. Benzin oder Diesel.

Ausserdem betrifft die vorliegende Erfindung eine Polymerleitung umfassend einen Mehrschichtverbund der oben geschilderten Art, welche dadurch gekennzeichnet ist, dass die erste Schicht wenigstens mittelbar als Innenschicht mit einer Dicke im Bereich von 0.01 bis 0.7 mm, die zweite Schicht daran angrenzend als Haftvermittlerschicht mit einer Dicke von 0.05 bis 0.3 mm, und die dritte Schicht wenigstens mittelbar als Aussenschicht mit einer Dicke von 0.2 bis 0.8 mm ausgestaltet sind.

Generell kann wenigstens eine der Schichten der Polymerleitung, bevorzugt die Innenschicht, elektrisch leitend ausgebildet sein und/oder es ist möglich, dass die erste Schicht innenseitig eine weitere, innerste Schicht aufweist, die elektrisch leitfähig ausgestaltet ist und die bevorzugt auf demselben Polymer beruht wie die erste Schicht.

Zuletzt betrifft die vorliegende Erfindung ein Verfahren zur Herstellung eines Hohlkörpers aus einem thermoplastischen Mehrschichtverbund der oben geschilderten Art, welches Verfahren dadurch gekennzeichnet ist, dass für die Herstellung der Formmasse für die zweite Schicht ein Lactam (oder die ω-Aminocarbonsäure), das Polyamin, in Form von Polyethylenimin, sowie Wasser zunächst bei erhöhter Temperatur homogenisiert und anschliessend bei weiter erhöhter Temperatur von mehr als 300°C während mehreren Stunden bei erhöhtem Druck sowie bei anfolgender Führung auf atmosphärischen Druck und erniedrigter Temperatur zum Polyamid/Polyamin-Copolymer polymerisiert wird. Die erste Schicht, die zweite Schicht sowie die dritte Schicht und gegebenenfalls weitere Aussen- oder Innenschichten können in einem Koextrusionsprozess insbesondere bevorzugt zu einem Rohr respektive einer Leitung oder einem Behälter zusammengefügt werden.

Die erfindungsgemässen Mehrschichtverbunde finden bei Konstruktionsteilen im Bereich der Elektro-, Maschinenbau- und Automobilindustrie sowie im Gebiet der optischen Datenübertragung dort Verwendung, wo aus physikalisch-optischen Gründen der Lichtwellenleiter mit einem Fluorpolymer als erster Schicht beschichtet wird. Insbesondere finden sie auch Anwendung als Folien oder als Mehrschichtrohre, z.B. im Bereich der Kfz-Industrie. Die Erfindung betrifft daher auch einen Polyamid/Polyamin-Copolymer-Haftvermittler, der insbesondere im Koextrusionsprozess eingesetzt werden kann, um Rohre aus Polyamid (insbesondere aus Polyamid 12) und Fluorpolymeren, z.B. ETFE oder einem Terpolymeren aus VDF, TFE und HFP kraftschlüssig miteinander zu verbinden. Diese Verbindung zwischen den einzelnen Schichten ist direkt nach der Röhrextrusion vorhanden und bleibt auch nach Kraftstoff-Kontakt dieser erfindungsgemässen Mehrschichtrohre bestehen.

### KURZE ERLÄUTERUNG DER FIGUREN

Die Erfindung soll nachfolgend anhand von Ausführungsbeispielen im Zusammenhang mit der Zeichnung näher erläutert werden. Es zeigt:

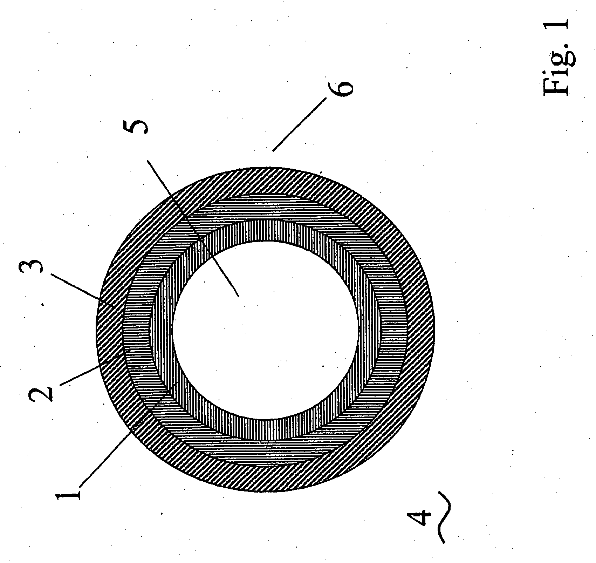

Fig. 1 einen axialen Schnitt durch eine Kraftstoffleitung mit einem Mehrschichtaufbau.

### WEGE ZUR AUSFÜHRUNG DER ERFINDUNG

Fig. 1 zeigt einen allgemeinen Aufbau einer Kraftstoffleitung aus einem thermoplastischen Mehrschichtverbund 4, welche als Ausführungsbeispiel für die vorliegende Erfindung dienen soll. Die Leitung umfasst einen Innenraum 5, welcher nach aussen zunächst von einer ersten Schicht, der Innenschicht 1 umschlossen ist. Unmittelbar an die Innenschicht 1 grenzt eine zweite Schicht, eine Haftvermittlerschicht 2. Die Kraftstoffleitung wird zum Aussenraum 6 durch eine dritte Schicht, die Aussenschicht 3 begrenzt, welche unmittelbar an die Zwischenschicht 2 grenzt. Nicht dargestellt aber ebenfalls möglich sind weitere Schichten, welche beispielsweise zum Innenraum 5 oder zum Aussenraum 6 angeordnet sind.

Erfindungsgemäss wird vorgeschlagen, für die Innenschicht 1 eine Schicht auf Basis von Fluorpolymeren zu verwenden. Eine derartige Schicht verfügt über eine optimale Barrierefunktion. Insbesondere bevorzugt findet als derartige erste Schicht eine Schicht aus Ethylen/Tetrafluorethylen (ETFE) Verwendung (vgl. z.B. Kunststoff-Kompendrum A. Franck und K. Biederbick, 2. Auflage, 1988, S. 112 sowie S. 153; oder Kunststoff Taschenbuch, K. Oberbach, 28. Ausgabe, 2001, S. 23 sowie S. 469). Es handelt sich dabei typischerweise um ein nahezu alternierendes Copolymer aus etwa 25 Masse-% Ethen und 75 Masse-% Tetrafluorethen, d. h. um ein Copolymer mit einem molaren Verhältnis von etwa 1,2:1. Alternativ ist es möglich, die Innenschicht z.B. aus Poly(vinylidenfluorid) (PVDF) auszubilden (vgl. Kunststoff-Kompendium, A. Franck und K. Biederbick, 2. Auflage, 1988, S. 152 oder Kunststoff Taschenbuch, K. Oberbach, 28. Ausgabe, 2001, S. 23 sowie S. 467), einem teilkristallinen thermoplastischen Werkstoff.

Die äussere Schicht, die dritte Schicht 3 ist eine Schicht auf Basis von Polyamid, vorzugsweise auf Basis von Polyamid 12. Dieser Schicht können Additive zugesetzt sein, wie beispielsweise Schlagzähmodifikatoren und/oder weitere Additive.

Haftvermittlersysteme für ETFE- oder PVDF-Copolymere sind schwierig zu realisieren, insbesondere wenn gleichzeitig eine Haftung zu einer weiteren Schicht auf Basis von Polyamid gewährleistet werden muss.

Eine Möglichkeit ist die Coronabehandlung der ETFE-Schicht mit anschliessender Beschichtung mit Polyamid, wie im Stand der Technik schon erwähnt (vgl. EP-A-0551094). Nachteil ist die geringe Extrusionsgeschwindigkeit und das schwierige Erreichen von konstanten Haftungswerten. Andere Lösungsmöglichkeiten sind die Coextrusion von Fluorpolymeren und Polyamiden mit Aminoendgruppenüberschuss. Die Einstellung eines Überschusses an Aminoendgruppen erfolgt üblicherweise über Zugabe von basischen Reglern (bzw. leichtem Überschuss des Diamins) während der Polymerisation. Beispiele hierfür sind Diamine wie Hexamethylendiamin oder Decan- oder Dödecandiamin. Nachteilig hierbei ist, dass zum Erreichen einer hohen NH₂-Endgruppenkonzentration hohe Reglermengen notwendig sind, die wiederum wegen ihres Einbaus in die Polyamidkette bzw. an die Kettenenden durch Reaktion mit COOH-Endgruppen die Molmasse beschränken, was zur Folge hat, dass die entstehenden Polyamide eine zu tiefe Viskosität besitzen. Speziell für die Coextrusion mit ETFE werden aber Polyamide mit einer hohen Viskosität benötigt.

Dies lässt sich erreichen, wenn keine niedermolekularen Amin-Regler sondern Polymere mit Aminogruppen, d.h. Polyamine, während der Polymerisation der Polyamid-Monomeren eingesetzt werden. Diese Polyamine sind beispielsweise Polyethylenimine (z.B. erhältlich unter dem Namen Lupasol^{®} von BASF, DE). Diese werden sozusagen als polymere Regler in das Makromolekül eingebaut, wodurch das Polyamid/Polyamin-Copolymer entsteht.

Es hat sich nun gezeigt, dass Polyamid/Polyamin-Copolymere, denen während der Polymerisation bzw. im Reaktionsansatz Polyethylenimine in Mengen von 0.5 bis 1.5 Gew.-% zugesetzt wurden, sehr gut auf ETFE-Copolymeren haften.

Als Polyamid/Polyamin-Copolymere für die erfindungsgemässe Formmasse für die Schicht 2 werden vorteilhafterweise Polykondensate aus Polyethyleniminen und aliphatischen Lactamen oder ω- Aminocarbonsäuren mit 4 bis 44 Kohlenstoffatomen, bevorzugt 4 bis 18 Kohlenstoffatomen, oder solche aus aromatischen ω-Aminocarbonsäuren mit 6 bis 20 Kohlenstoffatomen eingesetzt.

Besonders geeignet als Basis für die erfindungsgemässen Polyamid/Polyamin-Copolymere sind dabei Homo- und Copolyamide ausgewählt aus PA 6, PA 11, PA 46, PA 12, PA 1212, PA 1012, PA 610, PA 612, PA 69, PA 6T, PA 6I, PA 10T, PA 12T, PA 12I, deren Gemischen oder Copolymeren auf Basis dieser Polyamide, wobei PA 11, PA 12, PA 1212, PA 10T, PA 12T bevorzugt sind. Bevorzugt sind auch Copolymere auf Basis von den vorgenannten Polyamiden wie z.B. PA 12T/12, PA 10T/12, PA 12T/106 und PA 10T/106. Es kann sich bei der Basis für die erfindungsgemässen Polyamid/Polyamin-Copolymeren auch um PA 6/66, PA 6/612, PA 6/66/610, PA 6/66/12, PA 6/6T und PA 6/6I handeln. Den Polyamid/Polyamin-Copolymeren können aber auch für bestimmte Zwecke noch andere, übliche Polymere zugesetzt sein. Sie können überdies die üblichen Zusatzstoffe enthalten wie UV- und Hitzestabilisatoren, Kristallisationsbeschleuniger, Weichmacher, Flammschutzmittel, Schlagzähmodifikatoren und Gleitmittel.

Weitere Polymere, die in dem erfindungsgemässen Polyamid/Polyamin-Copolymer der zweiten Schicht 2 enthalten sein können, sind funktionalisierte Polymere, zu denen Homo- oder Copolymere aus Olefinen gehören, die mit Acrylsäure oder Maleinsäureanhydrid gepfropft sind.

Die folgenden Beispiele erläutern die vorliegende Erfindung, ohne sie einzuschränken.

### Eingesetzte Materialien für die zweite Schicht 2, Polyamid/Polyamin-Copolymer:

| | |
|---|---|
| Polyamidbaustein: | Laurinlactam (ergibt PA 12-Basis) |
| Polyamin: | Polyethylenimin (Lupasol, BASF, DE, vgl. Tabelle 1) |

**Tabelle 1**

| | Lupasol G100 | Lupasol FG | Lupasol G20wfr |
|---|---|---|---|
| Viskosität, 20°C (mPa * s) | 1200 | 3000 | 5000 |
| Molmasse (g/mol) | 5000 | 800 | 1300 |
| Amino-Endpruppen (µÄq/g) | 8000 | 14000 | 15'000 |
| Wassergehalt (%) | 50 | 1 | 1 |

| | | | |
|---|---|---|---|
| wfr: wasserfrei | | | |

| | |
|---|---|
| Schlagzähmodifikator: | Ethylen-Propylen-Copolymer mit Maleinsäureanhydrid gepfropft |
| | MVR 275°C/5 kg: 13 cm³/10 min (DIN ISO 1133: 1991) |
| | Schmelzpunkt DSC: 55°C |

### Verfahren zur Herstellung des Ausgangsmaterials für zweite Schicht 2, Polyamid/Polyamin-Copolymer:

Die Herstellung erfolgte in einem 130 Liter Druckreaktör bestehend aus Löser und Polymerisationsautoklav. Laurinlactam, Regler (Polyethylenimin, Lupasol) und Wasser werden in den Löser gegeben und mehrmals mit Stickstoff inertisiert. Danach wird die Temperatur auf 180 °C erhöht und der Polymerisationsansatz 60 Minuten homogenisiert. Anschliessend wird die Temperatur auf 320 °C erhöht, wobei während 5 Stunden bei 20 bar die Ringöffnung des Laurinlactams erfolgt. Nach Entspannung auf atmosphärischen Druck erfolgt bei 290 °C während 2 Stunden die Polymerisation unter Durchleitung von Stickstoff. Zum Ende der Polymerherstellung wird durch Einstellen eines Vakuums von 30 mbar ein hoher Polymerisationsgrad des Polyamid/Polyamin-Copolymers erreicht.

Das Polyamid/Polyamin-Copolymer kann sowohl in reiner Form als auch nach Zugabe von weiteren Modifizierungsmitteln beispielsweise zur Erhöhung der Schlagzähigkeit (s. Tabelle 3) als Haftvermittler zu Fluorpolymeren eingesetzt werden. Die Zugabe dieser Modifizierungsmittel kann über ein anschliessendes Compoundier-Verfahren mittels üblichen Zweiwellen-Extrudern erfolgen.

### Bestimmung der Eigenschaften des resultierenden Materials insbesondere im Verbund mit weiteren Schichten:

Die Prüfung der erfindungsgemässen und nicht erfindungsgemässen Formmassen (Vergleichsbeispiel) wurden gemäss folgenden Vorschriften durchgeführt:
MVR: (Melt volume rate) bei 275°C/5 kg nach ISO 1133: 1991
SZ: Schlagzähigkeit nach ISO 179/1eU
KSZ: Kerbschlagzähigkeit nach ISO 179/1eA
Rel. Viskosität: gemessen an einer 0.5 Gew.-%igen Lösung der Probe in m-Kresol nach EN ISO 307
Streckspannung, Reissdehnung und Zug-E-Modul wurden gemäss ISO527 ermittelt.

Die Bestimmung der Haftwerte wurde durch eine Bändchen-Extrusion aus zwei respektive drei Schichten, ETFE (Schicht 1) und erfindungsgemässes Polyamid/Polyamin-Copolymer (Schicht 2) respektive ETFE (Schicht 1) und erfindungsgemässes Polyamid/Polyamin-Copolymer (Schicht 2) und Polyamid PA12 (Schicht 3) durchgeführt.

Als ETFE-Copolymer wurde ein Tefzel^{®} 2202 von DuPont eingesetzt. Es handelt sich dabei um ein schmelzverarbeitbares Copolymer aus Ethylen und TFE, welches bei hohen Geschwindigkeiten verarbeitet werden kann.

In den folgenden Tabellen sind die Rezepturen und die Messdaten der Formmassen (Polyamid/Polyamin-Copolymere) respektive von daraus hergestellten Mehrschichtverbunden dargestellt. Als Vergleichsbeispiel wurde ein System verwendet, bei welchem an Stelle des Polyethylenimins (als Cokomponente und polymerem Kettenregler) ein niedermolekularer Regler (Hexamethylendiamin) zum Reaktionsansatz gegeben wurde. Wie in der Tabelle 2 anhand der Relativviskosität zu sehen ist, wird durch den niedermolekularen Regler das Kettenwachstum früh gebremst, so dass keine höheren Relativviskositäten erreicht werden können.

Die Angaben sind dabei jeweils Gewichts-%.

**Tabelle 2: Polyamid/Polyamin-Copolymere**

| | | **1** | **2** | **3** | **4** | **5** | **6** | **Vergleich 1** |
|---|---|---|---|---|---|---|---|---|
| **Reaktionsansatz** | | | | | | | | |
| LAURINLACTAM | | 99 | 99.25 | 98.75 | 99 | 99.566 | 99.539 | 99.4 |
| LUPASOL G 100 [50%lG] | | 1 | 0.75 | 1.25 | 1 | | | |
| LUPASOL FG | | | | | | 0.434 | | |
| LUPASOL G20WFR | | | | | | | 0.461 | |
| HEXAMETHYLENDIAMIN (60%) | | | | | | | | 1.01 |
| WASSER | | 20 | 20 | 20 | 20 | 20 | 20 | 3.75 |

| **Fertige Formmassen** | | | | | | | | |
|---|---|---|---|---|---|---|---|---|
| Wassergehalt | % | 0.02 | 0.02 | 0.01 | 0.02 | 0.03 | 0.02 | 0 |
| Rel. Viskosität (0.5% m-Kresol) | - | 1.96 | 1.96 | 1.93 | 2.13 | 2.10 | 2.06 | 1.65 |
| MVR (275°C/5kg) | cm³/10m in | 28 | 25 | 22 | 14 | 20 | 46 | 70 |
| COOH-Endgruppen | µÄq/g | 20 | 28 | 11 | 24 | 34 | 20 | 15 |
| NH₂-Endgruppen | µÄq/g | 108 | 88 | 119 | 98 | 64 | 99 | 100 |
| Endgruppensumme | µÄq/g | 128 | 116 | 130 | 122 | 98 | 119 | 115 |
| Methanol-Extrakt | % | 0.95 | 1.03 | 1.33 | 1.07 | 0.89 | 0.93 | 0.9 |
| Schmelzpunkt | °C | 180 | 180 | 180 | 178 | 180 | 180 | 180 |

Bei einem Peel-Test an zweischichtigen Bändchen wurden folgende Haftkräfte gemessen:

| | |
|---|---|
| Erfindungsgemäss: Schicht 1 / Schicht 2 nach Beispiel 1: | 20 N |
| Vergleichsbeispiel: Schicht 1 / Schicht 2 nach Vergleichsbeispiel 1: | 3 N |

**Tabelle 3: Schlagzähe Polyamid/Polyamin-Copolymere**

| | | 7 | 8 | V2 |
|---|---|---|---|---|
| Polyamid/Polyamin-Copolyer aus Beispiel 4 | % | 90 | | |
| Polyamid/Polyamin-Copolyer aus Beispiel 6 | % | | 90 | |
| Polyamid12 aus Vergleichsbeispiel | % | | | 90 |
| Schlagzähmodifikator | % | 10 | 10 | 10 |
| | | | | |
| Wassergehalt | Gew.-% | 0.015 | 0.018 | 0.018 |
| NH₂-Endgruppen | µeq/g | 82 | 82 | 39 |
| COOH-Endgruppen | µeq/g | 30 | 22 | 19 |
| Endgruppensumme | µeq/g | 112 | 104 | 58 |
| Methanol-Extrakt | % | 1.43 | 1.56 | 1.42 |
| MVR. 275°C/21.6 kg | cm³/10min | 100 | 280 | 160 |
| Rel. Viskosität (0.5%.m-Kresol) | - | 1.97 | 1.90 | 2.01 |
| Zug-E-Modul | MPa | 1250 | 1200 | 1150 |
| Streckspannung | MPa | 35 | 35 | 5 |
| Dehnung bei Strckspannung | % | 5 | 5 | 35 |
| Reissfestigkeit | MPa | 40 | 35 | 40 |
| Reissdehnung | % | 115 | 115 | 200 |
| Schlagzähigkeit, 23°C | kJ/m² | ohne Bruch | ohne Bruch | ohne Bruch |
| Schlagzähigkeit, -30°C | kJ/m² | ohne Bruch | ohne Bruch | ohne Bruch |
| Kerbschlagzähigkeit, 23°C | kJ/m² | 45 | 35 | 70 |
| Kerbschlagzähigkeit, -30°C | kJ/m² | 13 | 12 | 17 |

### Bestimmung der Haftung der Schicht 2 zur Schicht 3, einer Polyamid 12 Schicht:

Es wurden zweischichtige Versuche durchgeführt. Die Haftung zwischen der Polyamid12/Polyamin-Copolymerschicht und dem Polyamid 12 der Aussenschicht ist aufgrund der hohen chemischen Ähnlichkeit so gross, dass sich diese Schichten nicht trennen lassen.

Wie die Beispiele der Tabellen 2 und 3 zeigen, ist es nur bei Verwendung von Polyaminen als Co-Bestandteil in einem Polyamid/Polyamin-Copolymer möglich, gleichzeitig hohe Viskositäten des Polyamids und eine NH₂-Endgeuppen-Konzentration grösser als 50 µÄq/g zu erreichen. Diese beiden Faktoren sind u.a. wichtig, wenn Mehrschichtsysteme aus Fluorpolymeren wie ETFE sowie Polyamiden mit guter Schichtenhaftung hergestellt werden sollen.

Bei der Verwendung von schlagzähmodifizierten Polyamid/Polyamin-Copolymeren werden gleiche Haftwerte zwischen Fluorpolymer und Polyamid/Polyamin-Copolymer erreicht wie ohne Schlagzähmodifikator.

### BEZUGSZEICHENLISTE

- 1: Innenschicht, erste Schicht
- 2: Haftvermittlerschicht, zweite Schicht
- 3: Aussenschicht, dritte Schicht
- 4: thermoplastischer Mehrschichtverbund
- 5: Innenraum
- 6: Aussenraum

## Patentansprüche

1. Thermoplastischer Mehrschichtverbund (4) aufgebaut aus wenigstens einer ersten Schicht (1) auf Basis von Fluorpolymeren, sowie wenigstens einer weiteren, unmittelbar an die erste Schicht grenzenden zweiten Schicht (2)
**dadurch gekennzeichnet, dass**
die zweite Schicht (2) auf Basis von Polyamid/Polyamin-Copolymeren aufgebaut ist, und dass die Formmasse der zweiten Schicht (2) Polyamin in Form von Polyethylenimin in einer Menge von 0.2 bis 5 Gew.-% als Cokomponente im Polyamid/Polyamin-Copolymer enthält,
wobei es sich um einen Mehrschichtverbund in Form eines Hohlkörpers handelt, und wobei es sich bei der ersten Schicht (1) um eine der Innenseite des Hohlkörpers zugewandte Schicht handelt,
wobei die zweite Schicht (2) unmittelbar an eine dritte, wenigstens mittelbar der Aussenseite des Hohlkörpers zugewandte Schicht (3) auf Basis von Polyamiden grenzt, wobei die Polyamid/Polyamin-Copolymere der zweiten Schicht (2) und die Polyamide der dritten Schicht (3) wenigstens teilweise ähnlich sind, indem wenigstens 95% der dem Polyamid zugrundeliegenden Monomere der zweiten Schicht (2) und der dritten Schicht (3) identisch sind
und wobei die Schichten (1,2,3) im wesentlichen vollflächig unmittelbar aneinander grenzen.

2. Thermoplastischer Mehrschichtverbund (4) nach Anspruch 1, **dadurch gekennzeichnet, dass** das Fluorpolymere ausgewählt ist aus Fluorpolymeren auf Basis von Tetrafluorethylen (TFE), Hexafluoropropylen (HFP), Vinylfluorid (VF), Perfluoromethylvinylether (PMVE) oder Vinylidenfluorid (VDF), oder aus Gemischen einer derartigen Basis, mit oder ohne Ethylen.

3. Thermoplastischer Mehrschichtverbund (4) nach einem der vorhergehenden Ansprüche, **dadurch gekennzeichnet, dass** es sich bei der ersten Schicht (1) um eine Schicht auf Basis von Ethylen/Tetrafluoroethylen-Copolymeren (ETFE) oder auf Basis von Polyvinylidenfluorid (PVDF) handelt.

4. Thermoplastischer Mehrschichtverbund (4) nach einem der vorhergehenden Ansprüche, **dadurch gekennzeichnet, dass** es sich bei der Innenschicht (1) um eine bezüglich Haftung unmodifizierte Schicht auf Basis von Fluorpolymeren handelt.

5. Thermoplastischer Mehrschichtverbund (4) nach einem der vorhergehenden Ansprüche, **dadurch gekennzeichnet, dass** es sich bei den Polyamid/Polyamin-Copolymeren der zweiten Schicht (2) und den Polyamiden der dritten Schicht (3) um Polymerisate oder Polykondensate basierend auf aliphatischen Lactamen oder ω-Aminocarbonsäuren mit 4 bis 44 Kohlenstoffatomen, bevorzugt 4 bis 18 Kohlenstoffatomen, insbesondere 12 Kohlenstoffatomen oder solche aus aromatischen ω-Aminocarbonsäuren mit 6 bis 20 Kohlenstoffatomen handelt.

6. Thermoplastischer Mehrschichtverbund (4) nach einem der vorhergehenden Ansprüche, **dadurch gekennzeichnet, dass** es sich bei den Polyamid/Polyamin-Copolymeren der zweiten Schicht (2) und den Polyamiden der dritten Schicht (3) um Polykondensate basierend auf mindestens einem Diamin und mindestens einer Dicarbonsäure mit jeweils 2 bis 44 Kohlenstoff-Atomen handelt.

7. Thermoplastischer Mehrschichtverbund (4) nach Anspruch 6, **dadurch gekennzeichnet, dass** es sich bei den Diaminen um wenigstens eines oder mehrere der Diamine ausgewählt aus der Gruppe: Ethyldiamin, 1,4- Diaminobutan, 1,6- Diaminohexan, 1,10-Diaminodecan, 1,12-Diaminododecan, m- und p-Xylylendiamin, Cyclohexyldimethylenamin, Bis-(p-aminocyclohexyl)methan und deren Alkylderivate, handelt, und/oder dass es sich bei den Dicarbonsäuren um eine oder mehrere der folgenden Dicarbonsäuren handelt: Bernstein-, Glutar-, Adipin-, Pimelin-, Kork-, Azelain- und Sebacinsäure, Dodecandicarbonsäure, 1,6-Cyclohexandicarbonsäure, Terephthalsäure, Isophthalsäure und Naphthalindicarbonsäure.

8. Thermoplastischer Mehrschichtverbund (4) nach einem der vorhergehenden Ansprüche, **dadurch gekennzeichnet, dass** es sich bei der Basis für die Polyamid/Polyamin-Copolymere der zweiten Schicht (2) und den Polyamiden der dritten Schicht (3) um Homo- und Copolyamide ausgewählt aus PA 6, PA 11, PA 46, PA 12, PA 1212, PA 1012, PA 610, PA 612, PA 69, PA 6T, PA 6I, PA 10T, PA 12T, PA 12I, deren Gemischen oder Copolymeren auf Basis dieser Polyamide handelt, wobei PA 11, PA 12, PA 1212, PA 10T, PA 12T oder Copolymere auf Basis von den vorgenannten Polyamiden wie insbesondere PA 12T/12, PA 10T/12, PA 12T/106 und PA 10T/106 bevorzugt sind.

9. Thermoplastischer Mehrschichtverbund (4) nach einem der vorhergehenden Ansprüche, **dadurch gekennzeichnet, dass** es sich bei der Polyamid-Basis der Polyamid/Polyamin-Copolymeren der zweiten Schicht (2) und den Polyamiden der dritten Schicht (3) um PA 6/66, PA 6/612, PA 6/66/610, PA 6/66/12, PA 6/6T und PA 6/6I handelt.

10. Thermoplastischer Mehrschichtverbund (4) nach einem der vorhergehenden Ansprüche, **dadurch gekennzeichnet, dass** es sich bei den Polyamid/Polyamin-Copolymeren der zweiten Schicht (2) und den Polyamiden der dritten Schicht (3) um Polymere handelt, welchen andere Polymere wie insbesondere Polymere oder Copolymere auf Polyolefinbasis, die mit Acrylsäure oder Maleinsäureanhydrid gepfropft sind, und/oder Zusatzstoffe wie UV- und Hitzestabilisatoren, Kristallisationsbeschleuniger, Weichmacher, Flammschutzmittel, Schlagzähmodifikatoren und Gleitmittel zugesetzt sind.

11. Thermoplastischer Mehrschichtverbund (4) nach einem der vorhergehenden Ansprüche, **dadurch gekennzeichnet, dass** es sich bei den Polyaminen, die zur Herstellung der Polyamid/Polyamin-Copolymere für die zweite Schicht (2) verwendet wurden, um lineare oder verzweigte Polyethylenimine handelt.

12. Thermoplastischer Mehrschichtverbund (4) nach Anspruch 11, **dadurch gekennzeichnet, dass** es sich bei den Polyaminen, die zur Herstellung der Polyamid/Polyamin-Copolymere für die zweite Schicht (2) verwendet wurden, um lineare oder verzweigte Polyethylenimine mit einem Molgewicht im Bereich von 500 bis 25000 g/mol, bevorzugt von 800 bis 5000 g/mol, bevorzugt mit einer Viskosität im Bereich von 1200 bis 5000 mPa*s bei 20 °C, handelt.

13. Thermoplastischer Mehrschichtverbund (4) nach einem der vorhergehenden Ansprüche, **dadurch gekennzeichnet, dass** die Formmasse der zweiten Schicht (2) eine Amino-Endgruppenkonzentration im Bereich von 50 bis 300 µÄq/g aufweist.

14. Thermoplastischer Mehrschichtverbund (4) nach einem der vorhergehenden Ansprüche, **dadurch gekennzeichnet, dass** die Formmasse der zweiten Schicht (2) einen Volumenfliessindex von 10 bis 50 cm³/10min bei 275°C/5kg nach ISO 1133 aufweist, insbesondere für Leitungen oder Behälter, oder dass die Formmasse der zweiten Schicht (2) einen Volumenfliessindex von 50 bis 500 cm³/10min bei 275°C/5kg nach ISO 1133 aufweist, insbesondere für die Beschichtung von optischen Leitern.

15. Thermoplastischer Mehrschichtverbund (4) nach einem der vorhergehenden Ansprüche, **dadurch gekennzeichnet, dass** die erste Schicht (1) insbesondere durch Beimengung von Russ- oder Graphitpartikeln antistatisch ausgerüstet ist.

16. Thermoplastischer Mehrschichtverbund (4) nach einem der vorhergehenden Ansprüche, **dadurch gekennzeichnet, dass** die Formmasse der zweiten Schicht (2) Polyethylenimin in einer Menge von 0.4 bis 1.5 Gew.-% als Cokomponente im Polyamid/Polyamin-Copolymer enthält, wobei die restlichen Co-Anteile des Copolymers aus Polyamid bestehen.

17. Verwendung eines thermoplastischen Mehrschichtverbundes (4) nach einem der Ansprüche 1 bis 16 als medienführende Leitungen oder Behälter insbesondere im Kraftfahrzeugbereich, insbesondere bevorzugt als Kraftstoffleitung für beispielsweise Benzin oder Diesel.

18. Polymerleitung umfassend einen Mehrschichtverbund (4) nach einem der Ansprüche 1 bis 16.

19. Polymerleitung nach Anspruch 18, **dadurch gekennzeichnet, dass** die erste Schicht (1) auf Basis von Fluorpolymer durch Beimengung von elektrisch leitfähigen Additiven antistatisch ausgerüstet ist.

20. Polymerleitung nach Anspruch 19, **dadurch gekennzeichnet, dass** es sich bei den elektrisch leitfähigen Additiven um Russ- oder Graphitpartikel handelt.

21. Polymerleitung nach einem der Ansprüche 18-20, **dadurch gekennzeichnet, dass** es sich um eine Kraftstoffleitung für Benzin oder Diesel handelt.

22. Polymerleitung nach einem der Ansprüche 18-21 **dadurch gekennzeichnet, dass** sie drei Schichten umfasst und die erste Schicht wenigstens mittelbar als Innenschicht (1) mit einer Dicke im Bereich von 0.01 bis 0.7 mm, die zweite Schicht daran angrenzend als Haftvermittlerschicht (2) mit einer Dicke von 0.05 bis 0.3 mm, und die dritte Schicht wenigstens mittelbar als Aussenschicht (3) mit einer Dicke von 0.2 bis 0.8 mm ausgestaltet sind.

23. Polymerleitung nach einem der Ansprüche 18 bis 22, **dadurch gekennzeichnet, dass** wenigstens eine der Schichten, bevorzugt die Innenschicht, elektrisch leitend ausgebildet ist und/oder dass die erste Schicht (1) innenseitig eine weitere, innerste Schicht aufweist, die elektrisch leitfähig ausgestaltet ist.

24. Verfahren zur Herstellung eines Hohlkörpers aus einem thermoplastischen Mehrschichtverbund nach einem der Ansprüche 1 bis 16, **dadurch gekennzeichnet, dass** für die Herstellung der Formmasse für die zweite Schicht (2) ein Lactam, ein Polyethylenimin, sowie Wasser zunächst bei erhöhter Temperatur homogenisiert und anschliessend bei weiter erhöhter Temperatur von mehr als 300 °C während mehreren Stunden bei erhöhtem Druck sowie bei anfolgender Führung auf atmosphärischen Druck und erniedrigter Temperatur zum Polyamid/Polyamin-Copolymer polymerisiert wird.

25. Verfahren nach Anspruch 24, **dadurch gekennzeichnet, dass** die erste Schicht (1), die zweite Schicht (2) sowie die dritte Schicht (3) und gegebenenfalls weitere Aussen- oder Innenschichten in einem Koextrusionsprozess insbesondere bevorzugt zu einem Rohr respektive einer Leitung oder einem Behälter zusammengefügt werden.

## Claims

1. Thermoplastic multilayer composite (4) composed of at least one first layer (1) composed of fluoropolymers, and also of at least one other second layer (2), which has direct contact with the first layer
**characterized in that**
the second layer (2) is composed of polyamide-polyamine copolymers, and that the molding composition of the 2^{nd} layer (2) comprises polyamine in the form of polyethyleneimine, in an amount of from 0.2 to 5% by weight, as co-component in the polyamide-polyamine copolymer, wherein it is a multilayer composite in the form of a hollow body, where the first layer (1) is a layer facing towards the inner side of the hollow body,
wherein the second layer (2) directly adjoins a third layer (3) facing the outside composed of polyamides wherein the polyamide-polyamine copolymers of the second layer (2) and the polyamides of the third layer (3) are at least to some extent similar **in that** at least 95% of the monomers being the basis of the polyamide of the 2^{nd} layer (2) and of the 3^{rd} layer (3) are identical,
and wherein the layers (1, 2, 3) in essence have direct full-surface contact with one another.

2. Thermoplastic multilayer composite (4) according to Claim 1, **characterized in that** the fluoropolymer has been selected from fluoropolymers composed of tetrafluoroethylene (TFE), hexafluoropropylene (HFP), vinyl fluoride (VF), perfluorinated methyl vinyl ether (PMVE) or vinylidene fluoride (VDF), or of a mixture thereof, with or without ethylene.

3. Thermoplastic multilayer composite (4) according to any of the preceding claims, **characterized in that** the first layer (1) is a layer composed of ethylene-tetrafluoroethylene copolymers (ETFE) or composed of polyvinylidene fluoride (PVDF).

4. Thermoplastic multilayer composite (4) according to any of the preceding claims, **characterized in that** the inner layer (1) is a layer composed of fluoropolymers and not modified with respect to adhesion.

5. Thermoplastic multilayer composite (4) according to any of the preceding claims, **characterized in that** the polyamide-polyamine copolymers of the second layer (2) and/or the polyamides of the third layer (3) are polymers or polycondensates composed of aliphatic lactams or of ω-aminocarboxylic acids having from 4 to 44 carbon atoms, preferably from 4 to 18 carbon atoms, in particular 12 carbon atoms, or are polymers or polycondensates composed of aromatic ω-aminocarboxylic acids having from 6 to 20 carbon atoms.

6. Thermoplastic multilayer composite (4) according to any of the preceding claims, **characterized in that** the polyamide-polyamine copolymers of the second layer (2) and/or the polyamides of the third layer (3) are polycondensates composed of at least one diamine and of at least one dicarboxylic acid, in each case having from 2 to 44 carbon atoms.

7. Thermoplastic multilayer composite (4) according to Claim 6, **characterized in that** the diamines are at least one or more of the diamines selected from the following group: ethylenediamine, 1,4-diaminobutane, 1,6-diaminohexane, 1,10-diaminodecane, 1,12-diaminododecane, m- and p-xylylenediamine, cyclohexyldimethyleneamine, bis(p-aminocyclohexyl)methane and their alkyl derivatives, and/or the dicarboxylic acids are one or more of the following dicarboxylic acids: succinic, glutaric, adipic, pimelic, suberic, azelaic and sebacic acid, dodecanedicarboxylic acid, 1,6-cyclohexanedicarboxylic acid, terephthalic acid, isophthalic acid and naphthalenedicarboxylic acid.

8. Thermoplastic multilayer composite (4) according to any of the preceding claims, **characterized in that** the basis for the polyamide-polyamine copolymers of the second layer (2) and/or the polyamides of the third layer (3) is homo- and copolyamides selected from PA 6, PA 11, PA 46, PA 12, PA 1212, PA 1012, PA 610, PA 612, PA 69, PA 6T, PA 61, PA 10T, PA 12T, PA 12I, mixtures of these or copolymers composed of these polyamides, preference being given to PA 11, PA 12, PA 1212, PA 10T, PA 12T or to copolymers composed of the abovementioned polyamides, in particular PA 12T/12, PA 10T/12, PA 12T/106 and PT 10T/106.

9. Thermoplastic multilayer composite (4) according to any of the preceding claims, **characterized in that** the polyamide basis of the polyamide-polyamine copolymers of the second layer (2) and/or the polyamides of the third layer (3) is/are PA 6/66, PA 6/612, PA 6/66/610, PA 6/66/12, PA 6/6T and PA 6/6I.

10. Thermoplastic multilayer composite (4) according to any of the preceding claims, **characterized in that** the polyamide-polyamine copolymers of the second layer (2) and/or the polyamides of the third layer (3) are polymers to which other polymers, in particular polymers or copolymers composed of polyolefin grafted with acrylic acid or grafted with maleic anhydride, have been added, and/or to which additives, such as UV stabilizers and heat stabilizers, crystallization accelerators, plasticizers, flame retardants, impact modifiers and lubricants, have been added.

11. Thermoplastic multilayer composite (4) according to any of the preceding claims, **characterized in that** the polyamines used to prepare the polyamide-polyamine copolymers for the second layer (2) are linear or branched polyethyleneimines.

12. Thermoplastic multilayer composite (4) according to Claim 11, **characterized in that** the polyamines used to prepare the polyamide-polyamine copolymers for the second layer (2) are linear or branched polyethyleneimines with a molar mass in the range from 500 to 25 000 g/mol, preferably from 800 to 5000 g/mol, preferably with a viscosity in the range from 1200 to 5000 mPa*s at 20°C.

13. Thermoplastic multilayer composite (4) according to any of the preceding claims, **characterized in that** the moulding composition of the second layer (2) has an amino end group concentration in the range from 50 to 300 µeq/g.

14. Thermoplastic multilayer composite (4) according to any of the preceding claims, **characterized in that** the moulding composition of the second layer (2) has a volume flow index of from 10 to 50 cm³/10 min at 275°C/5 kg according to ISO 1133 in particular for piping and containers, or a volume flow index of from 50 to 500 cm³/10 min at 275°C/5 kg according to ISO 1133 in particular for the coating of optical conductors.

15. Thermoplastic multilayer composite (4) according to any of the preceding claims, **characterized in that** the first layer (1) has in particular been rendered antistatic via admixture of carbon black particles or graphite particles.

16. Thermoplastic multilayer composite (4) according to any of the preceding claims, **characterized in that** the moulding composition of the second layer (2) comprises polyethyleneimine, in an amount of from from 0.4 to 1.5% by weight, as co-component in the polyamide-polyamine copolymer, the remaining co-fractions of the copolymer being composed of polyamide.

17. Use of a thermoplastic multilayer composite (4) according to any of Claims 1 to 16 as fluid-conveying piping or containers, in particular in the motor vehicle sector, particularly preferably as fuel piping for, by way of example, petrol or diesel.

18. Polymer piping encompassing a multilayer composite (4) according to any of Claims 1 to 16.

19. Polymer piping according to claim 18, **characterized in that** the 1^{st} layer (1) on the basis of fluoropolymer is rendered antistatic by admixture of electrically conductive additives.

20. Polymer piping according to claim 19, **characterized in that** the electrically conducting additives are carbon black or graphite particles.

21. Polymer piping according to any of claims 18-20, **characterized in that** the multilayer composition (4) does not have a 3^{rd} or further layer and that the 2^{nd} layer is at the same time the outermost layer.

22. Polymer piping according to any of claims 18-21, **characterized in that** it comprises 3 layers and the first layer is at least indirectly an inner layer (1) with a thickness in the range from 0.01 to 0.7 mm, the second layer, in contact therewith, is an adhesive-promoter layer (2) with a thickness of from 0.05 to 0.3 mm, and the third layer is, at least indirectly, an outer layer (3) with a thickness of from 0.2 to 0.8 mm.

23. Polymer piping according to any of Claims 18 to 22, **characterized in that** at least one of the layers, preferably an inner layer, is electrically conducting and/or that the inner side of the first layer (1) has another, innermost layer, which is electrically conductive.

24. Process for the production in particular of a hollow body composed of a thermoplastic multilayer composite according to any of Claims 1 to 16, **characterized in that**, for the preparation of the moulding composition for the second layer (2) a lactam, a polyethyleneimine, and also water, are first homogenized at an elevated temperature, and then, at a further elevated temperature above 300°C, are polymerized for two or more hours at an elevated pressure, and also then brought to atmospheric pressure and a lower temperature, to give the polyamide-polyamine copolymer.

25. Process according to Claim 24, **characterized in that** the first layer (1), the second layer (2), and also, if appropriate, the third layer (3), and, if appropriate, other outer or inner layers are joined in a coextrusion process, particularly preferably to give a pipe or piping or a container.

## Revendications

1. Composite multicouche thermoplastique (4) constitué d'au moins une première couche (1) à base de polymères fluorés, ainsi que d'au moins une autre deuxième couche (2) adjacente directement à la première couche,
**caractérisé en ce que**
la deuxième couche (2) est constituée à base de copolymères polyamide/polyamine et que la matière à mouler de la deuxième couche (2) contient une polyamine, en forme de polyéthylène-imine, en une quantité de 0,2 à 5 % en poids, en tant que co-composant dans le copolymère polyamide/polyamine,
**en ce qu'**il s'agit d'un composite multicouche sous forme d'un corps creux, la première couche (1) étant une couche tournée vers la face interne du corps creux en ce qu'en outre la deuxième couche (2) est adjacente directement à une troisième couche (3) extérieure à base de polyamides, **en ce que** les copolymères polyamide/polyamine de la deuxième couche (2) et les polyamides de la troisième couche (3) sont au moins en partie similaires **en ce qu'**au moins 95 % des monomères qui sont à la base du polyamide, de la deuxième couche (2) et de la troisième couche (3) sont identiques et les couches (1,2,3) étant de préférence adjacentes entre elles pratiquement sur toute leur surface.

2. Composite multicouche thermoplastique (4) selon la revendication 1, **caractérisé en ce que** le polymère fluoré est choisi parmi les polymères fluorés à base de tétrafluoroéthylène (TFE), hexafluoropropylène (HFP), fluorure de vinyle (VF), perfluorométhylvinyléther (PMVE) ou fluorure de vinylidène (VDF) ou parmi des mélanges à base de ceux-ci, avec ou sans éthylène.

3. Composite multicouche thermoplastique (4) selon l'une quelconque des revendications précédentes, **caractérisé en ce que** la première couche (1) consiste en une couche à base de copolymères éthylène/ tétrafluoroéthylène (ETFE) ou à base de poly(fluorure de vinylidène) (PVDF).

4. Composite multicouche thermoplastique (4) selon l'une quelconque des revendications précédentes, **caractérisé en ce que** la couche interne (1) consiste en une couche à base de polymères fluorés, non modifiée eu égard à l'adhérence.

5. Composite multicouche thermoplastique (4) selon l'une quelconque des revendications précédentes, **caractérisé en ce que** les copolymères polyamide/polyamine de la deuxième couche (2) et/ou les polyamides de la troisième couche (3) sont des polymères ou des produits de polycondensation à base de lactames aliphatiques ou d'acides ω-aminocarboxyliques aliphatiques ayant de 4 à 44 atomes de carbone, de préférence de 4 à 18 atomes de carbone, en particulier 12 atomes de carbone ou ceux à base d'acides ω-aminocarboxyliques aromatiques ayant de 6 à 20 atomes de carbone.

6. Composite multicouche thermoplastique (4) selon l'une quelconque des revendications précédentes, **caractérisé en ce que** les copolymères polyamide/ polyamine de la deuxième couche (2) et/ou les polyamides de la troisième couche (3) sont des produits de polycondensation à base d'au moins une diamine et d'au moins un acide dicarboxylique ayant chacun de 2 à 44 atomes de carbone.

7. Composite multicouche thermoplastique (4) selon la revendication 6, **caractérisé en ce que** les diamines consistent en au moins une ou plusieurs des diamines choisies dans le groupe : éthylènediamine, 1,4-diamino-butane, 1,6-diaminohexane, 1,10-diaminodécane, 1,12-diaminododécane, m- et p-xylylènediamine, cyclohexyl-diméthylène-amine, bis(p-aminocyclohexyl)méthane et leurs dérivés alkyliques, et/ou **en ce que** les acides dicarboxyliques consistent en un ou plusieurs des acides dicarboxyliques suivants : acide succinique, acide glutarique, acide adipique, acide pimélique, acide subérique, acide azélaïque et acide sébacique, acide dodécanedicarboxylique, acide 1,6-cyclohexane-dicarboxylique, acide téréphtalique, acide isophtalique et acide naphtalènedicarboxylique.

8. Composite multicouche thermoplastique (4) selon l'une quelconque des revendications précédentes, **caractérisé en ce que** la base des copolymères polyamide/polyamine de la deuxième couche (2) et/ou les polyamides de la troisième couche (3) sont des homo- et copolyamides choisis parmi PA 6, PA 11, PA 46, PA 12, PA 1212, PA 1012, PA 610, PA 612, PA 69, PA 6T, PA 6I, PA 10T, PA 12T, PA 12I, des mélanges de ceux-ci ou des copolymères à base de ces polyamides, le PA 11, le PA 12, le PA 1212, le PA 10T, le PA 12T ou des copolymères à base des polyamides précités, tels qu'en particulier le PA 12T/12, le PA 10T/12, le PA 12T/106 et le PA 10T/106 étant préférés.

9. Composite multicouche thermoplastique (4) selon l'une quelconque des revendications précédentes, **caractérisé en ce que** la base polyamide des copolymères polyamide/polyamine de la deuxième couche (2) et/ou les polyamides de la troisième couche (3) consistent en PA 6/66, PA 6/612, PA 6/66/610, PA 6/66/12, PA 6/6T et PA 6/6I.

10. Composite multicouche thermoplastique (4) selon l'une quelconque des revendications précédentes, **caractérisé en ce que** les copolymères polyamide/polyamine de la deuxième couche (2) et/ou les polyamides de la troisième couche (3) sont des polymères auxquels sont ajoutés d'autres polymères tels qu'en particulier des polymères ou copolymères à base de polyoléfines, qui sont greffés avec de l'acide acrylique ou de l'anhydride maléique, et/ou des additifs tels que des stabilisants UV et thermiques, des accélérateurs de cristallisation, des plastifiants, des agents ignifuges, des modificateurs antichoc et des lubrifiants.

11. Composite multicouche thermoplastique (4) selon l'une quelconque des revendications précédentes, **caractérisé en ce que** les polyamines qui ont été utilisées pour la préparation des copolymères polyamide/polyamine pour la deuxième couche (2) sont des polyéthylène-imines linéaires ou ramifiées.

12. Composite multicouche thermoplastique (4) selon la revendication 11, **caractérisé en ce que** les polyamines qui ont été utilisées pour la préparation des copolymères polyamide/polyamine pour la deuxième couche (2) sont des polyéthylène-imines linéaires ou ramifiées ayant une masse moléculaire dans la plage de 500 à 25 000 g/mole, de préférence de 800 à 5 000 g/mole, de préférence ayant une viscosité dans la plage de 1 200 à 5 000 mPa.s à 20 °C.

13. Composite multicouche thermoplastique (4) selon l'une quelconque des revendications précédentes, **caractérisé en ce que** la matière à mouler de la deuxième couche (2) présente une concentration de groupes amino en bout de chaîne dans la plage de 50 à 300 µEq/g.

14. Composite multicouche thermoplastique (4) selon l'une quelconque des revendications précédentes, **caractérisé en ce que** la matière à mouler de la deuxième couche (2) présente un indice de fluidité volumique de 10 à 50 cm³/10 min à 275 °C/5 kg selon ISO 1133, en particulier pour des conduits ou des récipients, ou **en ce que** la matière à mouler de la deuxième couche (2) présente un indice de fluidité volumique de 50 à 500 cm³/10 min à 275 °C/5 kg selon ISO 1133, en particulier pour le revêtement de guides optiques.

15. Composite multicouche thermoplastique (4) selon l'une quelconque des revendications précédentes, **caractérisé en ce que** la première couche (1) est munie d'un traitement antistatique en particulier par incorporation de particules de graphite ou de noir de carbone.

16. Composite multicouche thermoplastique (4) selon l'une quelconque des revendications précédentes, **caractérisé en ce que** la matière à mouler de la deuxième couche (2) contient une polyéthylène-imine, en une quantité de 0,4 à 1,5 % en poids, en tant que co-composant dans le copolymère polyamide/polyamine, les fractions co restantes du copolymère consistant de en polyamide.

17. Utilisation d'un composite multicouche thermoplastique (4) selon l'une quelconque des revendications 1 à 16, en tant que récipients ou conduits de transport de milieux en particulier dans le secteur des véhicules à moteur, en particulier de préférence en tant que conduit de carburant par exemple pour essence ou gazole.

18. Conduit polymère comprenant un composite multicouche (4) selon l'une quelconque des revendications 1 à 16.

19. Conduit polymère selon la revendication 18, **caractérisé en ce que** la première couche (1) à base de polymère fluoré est munie d'un traitement antistatique par incorporation d'additifs conducteurs de l'électricité.

20. Conduit polymère selon la revendication 19, **caractérisé en ce que** les additifs conducteurs de l'électricité consistent en des particules de graphite ou de noir de carbone.

21. Conduit polymère selon l'une quelconque des revendications 18 à 20, **caractérisé en ce que** le composite multicouche (4) est constitué sans troisième ni autre couche est la deuxième couche représente en même temps la couche externe.

22. Conduit polymère selon l'une quelconque des revendications 18 à 21, **caractérisé en ce qu'**il comprend trois couches et la première couche au moins indirectement en tant que couche interne (1) est disposée avec une épaisseur dans la plage de 0,01 à 0,7 mm, la deuxième couche adjacente à celle-ci, en tant que couche promotrice d'adhérence (2) est disposée avec une épaisseur de 0,05 à 0,3 mm, et la troisième couche au moins indirectement en tant que couche externe (3) est disposée avec une épaisseur de 0,2 à 0,8 mm.

23. Conduit polymère selon l'une quelconque des revendications 18 à 22, **caractérisé en ce qu'**au moins l'une des couches, de préférence la couche interne, est formée pour être conductrice de l'électricité et/ou **en ce que** la première couche (1) comporte sur la face interne une autre couche la plus interne qui est formée pour être conductrice de l'électricité.

24. Procédé pour la fabrication en particulier d'un corps creux à base d'un composite multicouche thermoplastique selon l'une quelconque des revendications 1 à 16, **caractérisé en ce que** pour la préparation de la matière à mouler pour la deuxième couche (2) on homogénéise d'abord à température élevée un lactame, la polyéthylène-imine, ainsi que de l'eau et ensuite, à une température encore plus élevée, de plus de 300 °C, on effectue la polymérisation pendant plusieurs heures sous une pression élevée ainsi qu'avec conduite subséquente sous la pression atmosphérique et à une température abaissée, pour aboutir au copolymère polyamide/polyamine.

25. Procédé selon la revendication 24, **caractérisé en ce que** la première couche (1), la deuxième couche (2) ainsi qu'éventuellement la troisième couche (3) et éventuellement d'autres couches externes ou internes sont réunies dans un processus de coextrusion, en particulier de préférence en un tube ou, respectivement, un conduit ou un récipient.
